(19) Europäisches Patentamt
European Patent Office
Office européen des brevets

(11) **EP 4 307 275 A1**

(12) **EUROPEAN PATENT APPLICATION**

(43) Date of publication:
**17.01.2024 Bulletin 2024/03**

(21) Application number: **22184907.8**

(22) Date of filing: **14.07.2022**

(51) International Patent Classification (IPC):
*G08G 1/16* (2006.01)    *G05D 1/00* (2006.01)
*H04W 4/46* (2018.01)    *B60W 60/00* (2020.01)

(52) Cooperative Patent Classification (CPC):
**G08G 1/162; B60W 60/001; G08G 1/166;**
**H04W 4/46;** H04W 4/027

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Bayerische Motoren Werke**
**Aktiengesellschaft**
**80809 München (DE)**

(72) Inventor: **Haefner, Bernhard**
**81375 München (DE)**

(54) **METHOD OF DECIDING ON PARTICIPATION IN A COOPERATIVE MANEUVER**

(57)    A computer-implemented method of deciding on participation in a cooperative maneuver involving an ego vehicle and at least a requesting vehicle comprises: receiving information about one or more proposed actions that the ego vehicle is supposed to execute as part of a cooperative maneuver requested by the requesting vehicle; checking whether the proposal is compatible with one or more predefined threshold constraints with regard to one or more quantities relevant for the control of the ego vehicle and whether the proposal is compatible with one or more predefined conditional constraints, the one or more conditional constraints concerning one or more of the following: an adherence to traffic rules; an adherence to a planned route; a number of cooperation requests that the ego vehicle has received within a defined time frame from the requesting vehicle; and outputting information confirming the willingness of the ego vehicle to participate in the cooperative maneuver if the proposal is compatible with each of the constraints.

Fig. 4

EP 4 307 275 A1

**Description**

This specification refers to a computer-implemented method of deciding on participation in a cooperative maneuver involving an ego vehicle and at least a requesting vehicle as well as to a computing device being configured for executing such a method. In particular, this specification refers to aspects of an algorithm by which the ego vehicle can decide whether or not to participate in a cooperative maneuver proposed by the requesting vehicle.

It is widely accepted that future mobility will be very different from the way we commute today. Vehicles will be able to perform more and more driving tasks autonomously. Besides this, vehicle- to-everything (V2X) communication will increase driving safety and environmental awareness via the transmission of periodic beacons, so-called Basic Safety Messages (BSMs) or Cooperative Awareness Messages (CAMs).

However, the potential of V2X does not end there. Vehicles can communicate to enable more advanced, coordinated maneuvers that would be impossible if vehicles acted on their own. Via intent sharing and joint decision-making, vehicles will perform coordinated actions together.

For example, unclear rights of way at non-signalized four-way stops are easy to resolve for human drivers using gestures and eye contact. Connected and automated vehicles will communicate and use distributed negotiation algorithms to decide who goes first. Other examples for advanced cooperative use cases are lane changes and opening a gap for on the main road for a vehicle exiting a parking lot.

Human drivers evaluate whether or not to help others based on personal priorities and the felt costs incurred for oneself. For example, if a driver is driving because of an urgent matter, he or she may be less willing to cooperate than if there is more time. Or the driver may not be able to let the neighboring vehicle in via a lane change since that would cut the way of another vehicle, putting the driver at a-for him/her intolerable-risk. This is why not every driver cooperates in the same manner with other traffic participants. For automated vehicles, independent of the concrete protocol for coordinating complex maneuvers, it is likewise unrealistic to assume that each vehicle will be cooperative in every case. Such a condition-less willingness to cooperate is unacceptable first and foremost out of safety of the intended functionality (SOTIF) [1] considerations. Each vehicle has to ensure its driving behavior is not causing safety risks to itself or others. This check is essential if maneuvers are not designed manually but dynamically by the vehicles themselves [2], since then another control instance is necessary to avoid accidents.

This leads to the question of how vehicles should decide whether or not to cooperate: based on which influences they should make a decision, and how can we evaluate the quality of such decisions? Hence, there is generally a need for an algorithm that evaluates cooperation requests in connection with a cooperative maneuver.

Researchers have taken many different approaches to cooperative maneuvers [8]. Implicit approaches rely on the periodic transmission of planned and desired trajectories by all traffic participants, see Lehmann et al. [9]. Vehicles evaluate received desired trajectories and have to evaluate whether or not they can and want to adapt their own planned ones to enable the sending vehicle's desired trajectory. Here, a cooperation validation needs to decide whether it is worth changing one's trajectory or not. Xu et al. [4], who extend Lehmann et al.'s approach, leave out this question. They can configure each vehicle's willingness to cooperate without stating implications for system fairness like egoistic behavior.

Explicit confirmation or denial of planned maneuvers forms another class of approaches. Hobert et al.'s [10] protocol deals with a lane change. A vehicle sends a Lane Change Request message, and based on the received Lane Change Responses, it determines and announces a suitable partner. After this partner has opened a gap, it sends a Lane Change Prepared message to the initiator, who will then be able to change lanes. Also, in this case, the receiving vehicles have to evaluate whether they can send a positive response or not.

Explicit approaches do not have to be application-specific. Häfner et al. [11] designed the complex vehicular interactions protocol (CVIP), a general handshake protocol for arbitrary maneuver coordination. See also the international patent application PCT/EP2020/060293, filed on April 9, 2020, which proposes a method related to CVIP, and which is hereby incorporated by reference. CVIP supports scenarios where two or more participants may jointly negotiate and perform maneuvers. Accordingly, the interaction between the participating vehicles may comprise a *Negotiation Phase* and an *Execution Phase.* Further, during an *Awareness Phase,* a cooperative awareness may be ensured via the exchange of Cooperative Awareness Messages (CAM) or Basic Safety Message (BSM) beacons. For example, such CAMs/BSMs may be utilized by an initiating vehicle to identify potential maneuver partners. Accordingly, this cooperation awareness is provided already before the *Negotiation Phase* and it may be maintained also during the *Negotiation Phase* as well as during the *Execution Phase.* Further, CVIP provides for status updates by means of Maneuver Status Messages (MSM) so as to enable each participant to monitor the maneuver progress during the *Execution Phase.* Essentially, according to CVIP, negotiation on the maneuver to perform is done via the transmission of Cooperative Request Messages (CQMs) and respective Cooperative Response Messages (CRMs), while during execution, Maneuver Status Messages (MSMs) and Maneuver Feedback Messages (MFMs) ensure synchronized state transitions.

The cooperation validation in this case has to evaluate received CQMs and decide whether an affirmative CRM can be sent, or adjustments have to be made. To prevent failures [12], every message can be resent up to c times, with a retransmission timeout (RTO) of $t_{rto}$.

While the references mentioned above focus on the protocol exchange and thus assume fully cooperative vehicles, other publications want to derive an optimal decision on driven maneuvers, mainly in a centralized way. For example, Lenz et al. [6] derive a cooperative cost function based on which optimal maneuvers can be selected. "Cooperative" means in this context that the function also takes other vehicles into account. However, such centralized cooperation approaches either assume a central traffic management entity with complete knowledge [13] or the same optimization function running on all vehicles [6], both combined with synchronized environmental models and information known to all participants. Both scenarios seem unrealistic because vehicles, on the one hand, will have to remain in control of their driving decisions, as opposed to mandatory maneuver commands from a centralized entity. On the other hand, the algorithms, parameters, or information on surrounding objects will vary among cars in the vicinity, making it hard to guarantee equal outcomes of a distributed cost function calculation. Burger et al. [3] likewise understand cooperation based on sharing utilities and optimizing total utility. However, communicating all possible maneuvers, including their utilities, will put considerable overhead on the communication medium. Even then, a vehicle has to decide whether it wants to follow the proposed maneuver since it is most likely not optimizing its own but total utility.

Both of the above-mentioned approaches fall short of realistic assumptions on traffic scenarios. At first, already from a functional safety aspect, it will not be possible for vehicles to always cooperate with others. Either the own information is insufficient for assessing the implications of cooperation, or other goals may conflict with the received cooperation request. Secondly, the algorithms deployed on vehicles may differ, as long as no standard prescribes the same implementation on all vehicles. Different automotive original equipment manufacturers (OEMs) may deploy different algorithms, and even among vehicle models or equipment variants, the implementations may vary with available computing power, storage capabilities, and in-vehicle interfaces among processing units.

For the case of an overtake, Vasic et al. [14] present a decision algorithm that determines whether to accept the risk of an overtake or not in case oncoming cars are detected. Based on distances and timing considerations, they developed a threshold-based decision algorithm.

Rewald and Stursberg [7] propose an auction-based conflict resolution scheme. Whenever two vehicles' trajectories are conflicting, they exchange costs induced by giving way to the other vehicle. The vehicle with the highest induced costs gets priority, and other vehicles need to adapt to its path. They assume that the weights of individual cost terms are the same for every vehicle. Another shortcoming of this approach is that the design of alternative maneuvers and the cost calculation for others' maneuvers are performed by each vehicle, leaving much room for misbehavior, like only proposing very high-cost alternatives. They also include bonuses that considerate vehicles can get for future auctions, without specifying essential details about this mechanism that could introduce unfairness into the system.

In summary, up to now, studies on cooperative maneuvers have not examined the actual evaluation of cooperation. For example, researchers either omitted details [4], assumed only cooperative vehicles [5] or used the same control algorithm with complete knowledge on all vehicles [6], [7], making them draw the same conclusions. Further, while many approaches as mentioned above prescribe a specific cooperation protocol, e.g., sharing maneuver options and costs, it is desirable to design a cooperation decision algorithm that can be realized with any cooperation protocol. Otherwise, lock-in situations could occur where standards may not update the cooperation protocol due to incompatibility with the cooperation decision algorithm. It is an object of the present invention to present a scheme by which an ego vehicle can decide whether or not to participate in a cooperative maneuver proposed by a requesting vehicle, wherein the proposed scheme shall overcome at least some of the shortcomings of the prior art mentioned above.

This object is solved by each of a computer-implemented method, a computing device, a computer program, a computer-readable storage medium, and a data carrier signal according to the independent claims. Preferred embodiments are the subject matter of the dependent claims.

It should be noted that additional features of a claim dependent on an independent claim may, without the features of the independent claim or in combination with a subset of the features of the independent claim, constitute a separate invention independent of the combination of all features of the independent claim, which may be the subject of an independent claim, a divisional application or a subsequent application. The same applies equally to technical teachings described in the description which may constitute an invention independent of the features of the independent claims.

According to a first aspect of the invention, a computer-implemented method of deciding on participation in a cooperative maneuver involving an ego vehicle and at least a requesting vehicle is presented.

As used in this specification, the term vehicle shall be understood in a broad sense. For example, the term vehicle includes passenger cars, busses, commercial vehicles, transport vehicles, drones, robots, motorboats, ships, agricultural vehicles, railway vehicles, and others.

Further, the term vehicle may refer to (fully or at least partially) automated or non-automated vehicles. In particular, the term vehicle may refer to an automated vehicle, as in the non-automated case, drivers can decide on cooperation based on their own preferences.

The requesting vehicle is a vehicle that proposes or requests a participation of the ego vehicle in a cooperative maneuver. For example, the requesting vehicle may be an initiating vehicle which initiates the negotiation of a coordinated or cooperative maneuver.

As used in the present specification, in accordance with a definition proposed by Burger et al. [3], a cooperative maneuver is understood to be a set of actions of at least two actors "willingly and knowingly executed with the intention to work towards a common goal."

The cooperative maneuver may comprise a plurality of individual actions and/or sub-maneuvers to be performed by the participants, e.g., by the requesting vehicle and the ego vehicle, respectively. In general, the cooperative maneuver may also involve further participants, i.e., other vehicles then the requesting vehicles than the requesting vehicle and the ego vehicle.

For example, the maneuver may include at least one of the following: a lane change of a participating vehicle (such as the ego vehicle and/or the requesting vehicle); a participating vehicle (such as the ego vehicle and/or the requesting vehicle) merging into a road via an on-ramp; one or more participating vehicles (such as the ego vehicle and/or the requesting vehicle) crossing an intersection in a coordinated manner; a maneuver wherein at least one participating vehicle (such as the requesting vehicle) avoids a hazard, e.g. by avoiding a collision with an obstacle, such as a vulnerable road user (VRU).

As one step, the method comprises receiving information about one or more proposed actions (e.g., a proposed trajectory) that the ego vehicle is supposed to execute as part of a cooperative maneuver requested by the requesting vehicle.

For example, the information may be received in a request message that the requesting vehicle has sent to the ego vehicle - and possibly to further vehicles - after determining a need for a joint maneuver.

In accordance with some embodiments, such a request message may be transmitted directly or indirectly from the requesting vehicle to the ego vehicle. For example, a wireless transmission path for the request message may extend between a transmitter of the requesting vehicle and a receiver of the ego vehicle, wherein optionally one or more intermediate stations, such as base stations etc., may be additionally involved.

In accordance with some embodiments, the request message sent by the requesting vehicle may already comprise concrete actions that the ego vehicle is supposed to perform as part of a requested cooperative maneuver.

However, it should be noted that it is also within the scope of the invention that in accordance with some embodiments the proposed action as such may be generated by a computing device of the ego vehicle itself. For example, depending on the communication protocol, the ego vehicle may first receive a rather abstract or general maneuver request (e. g., a general request to allow for the requesting vehicle to overtake) from the requesting vehicle, as opposed to concrete driving actions on trajectory level, or the like. In response to this request, a cooperative maneuver planner and/or a motion planner of the ego vehicle may then calculate one or more specific proposed driving actions (e.g., trajectories) for the ego vehicle and provide them to a maneuver validation module of the ego vehicle.

Thus, in accordance with some embodiments, the information about the one or more proposed actions need not necessarily be received directly from the requesting vehicle. Rather, the information about the one or more proposed actions may also be received by a computing device or a software module of the ego vehicle from another computing device and/or from another software module (possibly even executed on the same computing device that carries out the method of deciding on participation in a cooperative maneuver) of the ego vehicle itself.

As a further step, the method comprises checking whether or not the proposal (i.e., the one or more proposed actions) is compatible with one or more predefined threshold constraints with regard to one or more quantities relevant for the control of the ego vehicle. In other words, a binary decision is made as to whether or not a particular value would exceed a defined maximal or minimal value during execution of the proposed actions by the ego vehicle.

For example, the one or more threshold constraints may comprise one or more threshold criteria with regard to one of more of the following quantities:

- a velocity of the ego vehicle, in particular a velocity driving backwards;
- a positive or negative acceleration of the ego vehicle, in particular a longitudinal acceleration or deceleration;
- a change in a heading angle of the ego vehicle;
- a change in a steering angle of the ego vehicle;
- a duration of a lane change maneuver that is proposed as part of the requested cooperative maneuver.

As yet a further step, the method comprises checking whether or not the proposal is compatible with one or more predefined conditional constraints, the one or more conditional constraints concerning one or more of the following:

- an adherence to traffic rules, such as speed limits;
- an adherence to a planned route;
- a number of cooperation requests that the ego vehicle has received within a defined time frame from the requesting vehicle.

The method further comprises a step of outputting information confirming the willingness of the ego vehicle to participate in the cooperative maneuver (namely, by executing the proposed actions) if the proposal is compatible with each of the above-mentioned constraints.

In this context, it should be noted that if it is determined that the proposal is in violation of a conditional constraint, this usually leads to rejection of the proposal and hence said confirmation of the willing of the ego vehicle to participate in the cooperative maneuver is not issued. However, vehicles can accept proposals violating a conditional constraint if the requesting vehicle has high priority, e.g., if the requesting vehicle is an ambulance or a police car. Another situation would be emergencies where the requesting vehicle must avert a collision and thus initiates a cooperative maneuver. Hence the term "conditional" constraint, as such constraints are only effective as necessary conditions for participation in the proposed cooperative maneuver if the requesting vehicle is not determined to be a high priority vehicle and is also not determined to be in an emergency situation that necessitates the cooperative maneuver. For example, in such a situation the ego vehicle may confirm willingness to participate in the proposed maneuver despite having to leave its planned rout in order to make space for the requesting vehicle.

Accordingly, in an embodiment, the method may further comprise:

- determining whether the requesting vehicle is a high priority vehicle (such as an ambulance or police car), or whether the requesting vehicle is in an emergency situation (such as an imminent collision that might be averted by the proposed cooperative maneuver); and
- if it is determined that the requesting vehicle is a high priority vehicle or is in an emergency situation and that the proposal is compatible with the one or more threshold constraints, outputting information confirming the willingness of the ego vehicle to participate in the cooperative maneuver irrespective of whether or not the proposal is compatible with the one or more conditional constraints.

Further, it should be noted that in accordance with some embodiments, the determination that the proposal is compatible with each of the above-mentioned constraints (i.e., threshold constraint(s) and conditional constraint(s)) may not yet be a sufficient condition for outputting said confirmation.

For example, one or more hard constraints may be checked for in addition to the threshold constraint(s) and the conditional constraint(s). Such constraints are designated as "hard" constraints because compatibility of the proposal with the hard constraint(s) is a necessary condition for outputting said confirmation.

In other words, in accordance with some embodiment, the method further comprises checking whether the proposal is compatible with one or more predefined hard constraints and outputting information expressing the unwillingness of the ego vehicle to participate in the cooperative maneuver (i.e., rejecting the request to participate in the cooperative maneuver) if the proposal is incompatible with one or more of the hard constraints, even if it is determined that the requesting vehicle is a high priority vehicle or is in an emergency situation.

For example, checking whether the proposal is compatible with one or more predefined hard constraints comprises one or more of the following:

- checking that the proposal will not lead to a crash (e.g., of the ego vehicle and/or the requesting vehicle) with an object perceived by the ego vehicle; and
- checking that the proposal does not lead to the ego vehicle leaving a safe road territory.

It is also within the scope of the invention that the method may comprise: checking if the proposal will lead to a crash (e.g., of the ego vehicle and/or the requesting vehicle) with an object perceived by the ego vehicle, and if it is foreseen that the proposal will lead to a crash with an object perceived by the ego vehicle, outputting information about the foreseen crash. For example, such information may then be transmitted to the requesting vehicle, e.g., together with a message rejecting the participation of the ego vehicle in the proposed cooperative maneuver.

According to a second aspect of the invention, a computing device is configured for executing a method according to the first aspect of the invention. Therefore, the explanations and descriptions of embodiments of the method according to the first aspect, which are given above and in the following, may analogously apply to embodiments of the computing device according to the second aspect - and vice versa.

Accordingly, in some embodiments, such a computing device may be arranged in the first vehicle or in the ego vehicle.

In a third aspect, a computer program comprises instructions which, when the program is executed by a computing device (such as a computing device according to the second aspect of the invention), cause the computing device to carry out a method according to the first aspect of the invention.

In a fourth aspect, a computer-readable storage medium comprises instructions which, when executed by a computing device (such as a computing device according to the second aspect of the invention), cause the computing device to carry out a method according to the first aspect of the invention.

A fifth aspect refers to a data carrier signal carrying the computer program according to the fourth aspect.

Those skilled in the art will recognize additional features and advantages upon reading the following detailed description, and upon viewing the accompanying drawings.

Reference will now be made in detail to various embodiments, one or more examples of which are illustrated in the figures. Each example is provided by way of explanation and is not meant as a limitation of the invention. For example, features illustrated or described as part of one embodiment can be used on or in conjunction with other embodiments to yield yet a further embodiment. It is intended that the present invention includes such modifications and variations. The examples are described using specific language which should not be construed as limiting the scope of the appended claims. The drawings are not scaled and are for illustrative purposes only. For clarity, the same elements or method steps have been designated by the same references in the different drawings if not stated otherwise.

Fig. 1 schematically and exemplarily illustrates a driver assistance system including a computing device in accordance with one or more embodiments.

Fig. 2 shows simulation results for a processing time vs. maneuver duration when a cooperation validation is performed according to a method proposed herein.

Fig. 3 shows simulation results for ratio of negotiation failures based on cooperation validation when the cooperation validation is performed according to a method proposed herein.

Fig. 4 schematically and exemplarily illustrates a sequence of method steps in accordance with one or more embodiments.

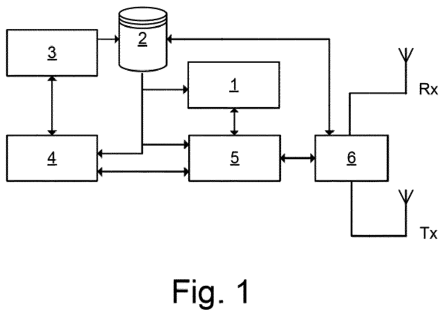

Fig. 1 schematically and exemplarily show a system architecture of a driver assistance system of an automated vehicle. The basic system architecture as depicted in Fig. 1 has been described earlier by Häfner et al. [12]. However, the system proposed here is characterized, in particular, in that it is configured to evaluate cooperation requests in a particular way, as will be explained in detail further below.

The driver assistance system of Fig. 1 will also be referred to as a cooperative-automated system in the following. Further, it is assumed in the following that each of an ego vehicle, a requesting vehicle and potentially further vehicles involved in a cooperative maneuver are equipped with a driver assistance system having essentially this architecture.

The blocks 1-6 depicted in Fig. 1 are functional modules, such as software modules implemented in corresponding hardware devices. In accordance with some embodiments, one or more of these functions could also be collocated within a more extensive function in the same hardware device. Further, the functional modules need not be executed on separate computing devices, but some or of the functions may be implemented in a same computing device, such as a central control unit of the vehicle.

The cooperative-automated system interacts with its environment via sending and receiving messages via a transmitter Tx and a receiver Rx, respectively.

Message services 6 process these messages, forwarding relevant information received by the transmitter Tx to the cooperative maneuver planner 5. The cooperative maneuver planner 5 is a central functional unit for designing, negotiating, and tracking cooperative maneuvers. The cooperative maneuver planner 5 passes on specific actions associated with cooperative maneuvers to a motion planner 4.

The motion planner 4 is a functional entity that is responsible for planning the ego vehicle motion planning, trajectory calculations, and safety assessments. The motion planner 4 interacts with sensors and actuators 3 to build an environmental model and perform the actual driving.

The environmental model together with information on an ego vehicle state may, for example, be stored in a data memory 2, as schematically depicted in Fig. 1 However, the information pool on the ego vehicle state and environmental model does not have to exist in a dedicated memory, but those data could, for example, also be directly read from a CAN bus. Further, the information on the ego vehicle state and environmental model may also be enriched with data received via V2X communication.

The system further comprises a cooperation validation module 1 which is responsible for evaluating cooperative maneuvers. This can happen before initiating a negotiation or after receiving an implicit or explicit request for cooperation. The cooperation validation module 1 responds to a maneuver proposal received from the cooperative maneuver planner 5 maneuver proposal with a confirmation or rejection for further processing, e.g., by sending a response or request message. Depending on the cooperation protocol, the cooperation validation module 1 may, for example, evaluate proposals by other vehicles or trajectories derived by the own motion planner 4.

Formally, the cooperation validation may be understood as a function of inputs *I* provided by the cooperative maneuver planner 5 as well as the current state information and environment model *S*:

$$C = f(I, S).$$

<div align="right">(1)</div>

An exemplary algorithm according to which the cooperation validation module 1 may assess cooperative maneuvers will be described in detail further below.

In the following, first, the general rationale underlying a proposed algorithm for evaluating cooperation requests will be laid out. Then, an exemplary algorithm according to a preferred embodiment will be elaborated on in detail.

In order to be future-proof and flexible, the cooperation evaluation should not depend directly on the specific cooperation protocol or the communication technology used for maneuver coordination. This enables changes of the underlying protocols and the cooperation validation algorithm independently.

It should be noted in this context that the system architecture described above with reference to Fig. 1 does not rely on a specific communication protocol based on which cooperative maneuvers are exchanged and negotiated. The only assumption is that participants must implicitly or explicitly share intents and then evaluate maneuvers or trajectories. In the following description of exemplary embodiments, the initiating or requesting vehicle, also called host vehicle (HV), is the one sending out an intent to cooperate.

Vehicles should evaluate whether the proposed own actions (as received from the initiator or calculated on their own, depending on the cooperation protocol used) are acceptable. It is preferred that vehicles should decide this solely based on their own actions and the environment as perceived by sensors and cooperative perception because whether or not actions of other vehicles are acceptable to them (i.e., to the other vehicles) should not determine the ego vehicle's decision on participation. If necessary, the other vehicles have to deny the request. As soon as others have agreed on a proposal, the ego vehicle can take the proposed actions as given. This may even improve prediction because the ego vehicle knows the choreography of the cooperative maneuver, as opposed to a simple prediction based on zero acceleration movement without direction changes.

A threshold-based selection of maneuver options [14] may be acceptable on a single car according to the passengers' risk aversion. However, when several automated vehicles decide on cooperation together, it is preferable that they should not use cost function thresholds, including weighted terms or probabilities and stochastic acceptance. The reasons are that probabilistic decisions introduce unfairness, weighing terms of a cost function will need normalization, and several minor cost function terms may add up to exceed the-arbitrary-threshold, making cooperation infeasible.

In general, an evaluation of the maneuver as a whole, such as with regard to group size, maneuver duration, or complexity of the cooperative maneuver, may have disadvantages. A first possible disadvantage is that such specific parameters are generally dependent on the communication technology and the cooperation protocol. For example, some protocols do not even involve forming a group. Besides, an abstract maneuver description like "overtake" or "lane change" may not be readily available, for example, if the protocol involves only trajectory exchanges. The fewer assumptions the cooperation validation algorithm makes on the protocol, the more generally applicable it will be.

Not to assume anything on the underlying communication technology has several implications: the communication technology influences many parameters like the maximum group size for cooperation, the maximum message sizes, or expected latencies. Hence, a general approach to maneuver proposal evaluation should preferably not consider such parameters. Depending on the cooperation protocol, the cooperation algorithm either has to analyze trajectories proposed by the motion planning unit 4 of the vehicle itself, or it has to assess proposals by other vehicles. In the former case, vehicles who can come up with a valid trajectory with their motion planning unit 4 should accept the cooperation request and drive the cooperative maneuver since the motion planner 4 will consider all constraints and generate solely valid trajectories.

If the motion planner 4 can only calculate unacceptable trajectories, it will not derive a valid proposal, and the vehicle should refuse cooperation. However, if it can calculate at least one reasonable trajectory, it should choose one of them to enable cooperation. The metric to choose the best among all valid trajectories can be restricted to the single vehicle or-in a more complex fashion-be part of a local optimization function among all neighboring vehicles. Any further (by nature arbitrary) threshold or probability for cooperation may induce unfairness in the system and favor those unwilling to cooperate, even if they could, over those cooperating with others. This may represent an improvement as compared to today's driving behavior, as an example may explain. In the manual, uncooperative case, drivers have to accept a person cutting in their lane in front and then think of a reactive trajectory. Drivers will at first try to stay within comfortable bounds of velocities and accelerations. If that is not possible, they will search for a solution that exceeds those values or perform an unintended lane change to avoid a crash. They may even have to exceed the speed limit temporarily. In the cooperative case, all these possibilities are only evaluated theoretically, without the actual driving. If a vehicle finds an acceptable maneuver option to react to the request, it proposes and performs this maneuver. This is thus an improvement in comfort and time for "pro-active" computations.

A functional requirement regarding the cooperation algorithm is that it must enable deciding within the permissible time margins for the cooperative maneuver. If the initiator needs a response within tens of milliseconds, but a cooperation algorithm needs one second to evaluate the proposal, cooperation is impossible. Computation times of milliseconds seem permissible, even if a specific situation may allow for much larger margins, as shown by Häfner et al. [12].

An important goal of cooperation validation is to ensure fairness. In the present specification, an algorithm is defined as fair if it is deterministic, avoids egoistic, i.e., unnecessarily uncooperative behavior, and allows for individual differences in driver preferences and vehicle capabilities. Specifically, while individual acceptability thresholds may be provided, it shall be impossible to deny cooperation if no single threshold is exceeded.

The general guidelines outlined above also solve the problem of different algorithms running on different vehicles, e.g., due to sensor range or accuracy. For approaches based on global cost function optimization, the parameters need to be the same on all actors to derive exactly one optimal set of maneuvers chosen. As long as each vehicle can verify its own sub-maneuvers' feasibility, the system using our algorithm works even if vehicles draw different conclusions.

Next, an exemplary embodiment of a decision algorithm for evaluating cooperation requests will described in detail. The algorithm decides on cooperation based on hard, conditional, and threshold constraints. Hard and conditional constraints pose a yes-no decision for cooperation, while threshold constraints describe a range of acceptable values, which lead the algorithm to decline if exceeded. In the following, the name of each constraint will be indicated in parentheses, e.g., (H1).

If a proposal violates a hard constraint, this will always lead to a rejection of the evaluated proposal. The most direct hard constraint is an evaluation of a crash with any perceived object, not only maneuver participants (H1). If a vehicle foresees such a crash, then no matter what, it should decline the proposal. This evaluation may even occur during the execution of an agreed maneuver: If any participant predicts a crash, then it may initiate a safe emergency maneuver and potentially cancel the coordinated action. Depending on the communication protocol, the vehicle perceiving the crash may feed this information back to the initiating vehicle to update the request.

Another possible hard constraint is leaving safe road territory (H2). For example, a vehicle can deny proposals to follow a trajectory leading into the roadside ditch. However, a proposal to leave the road may be sensible, for example, for obstacle avoidance, if the sensors suggest that this part outside the road is suitable for driving on it. This is why the constraint should not be understood too simply as "leaving the road".

Conditional constraints include violating traffic rules (C1) or leaving the current planned route (C2) by, e.g., changing lanes to a highway exit lane, stopping instead of driving at an intersection, or driving straight instead of an intended turn. Conditional constraints usually lead to rejection, just like a hard constraint. However, vehicles can accept proposals violating a conditional constraint if the requesting vehicle has high priority, e.g., an ambulance or a police car. Another situation would be emergencies where a vehicle must avert a collision and thus initiates a cooperative maneuver.

Another possible conditional constraint that can lead to denial of cooperation is when receiving too many cooperation requests by the same vehicle in a too short time frame (C3), since this may be a sign of misbehavior. How many proposals are acceptable and whether all requests count or only the ones that have failed (to avoid too many insensible requests) can be an implementation choice adapted to the specific application. Another implementation choice could be to filter out requests from such a misbehaving vehicle directly.

Threshold constraints are constraints that apply in case a certain value exceeds a defined maximal (or minimal) value. Within the boundaries of the maximum and minimum, cooperation should be accepted. Outside of these boundaries, it will be denied, except for the above case of high-priority vehicles which can request to exceed thresholds.

A first exemplary criterion in this category refers to longitudinal acceleration (T1). Whenever the foreseen acceleration in a maneuver $\alpha'$ exceeds the vehicle's maximum acceptable acceleration $a_{max}^{+}$, or the maximum acceptable deceleration $a_{max}^{-}$ in case of slowing down, a proposal is unacceptable.

The same holds for the planned rate of change of the heading angle $\varphi'$ (T2). Too abrupt changes of direction are undesirable, so the thresholds $\varphi_{max}^{+}$ and $\varphi_{max}^{-}$ restrict the acceptable maximal absolute values of change in heading.

For the velocity $v'$, the criterion is similar, with, for example, $v_{max}^{-}$ denoting a maximal acceptable velocity driving backwards (T3).

Depending on the maneuver representation, these quantities may be retrieved easily or not. For example, the heading change is harder to calculate in lane-based maneuver descriptions without an absolute map than when given trajectories. If not readily available, implementers may choose other quantities, such as an acceptable duration for lane changes that translates into acceptable heading changes.

The algorithm uses maximum acceptable values because, similar to different driving modes like "eco", "green", "sport", "fun," there may be modes for automated vehicles, as well. Depending on the passengers' activity and the road conditions, they may accept higher or lower thresholds. Therefore, the same vehicle may find varying thresholds acceptable at different times. It is, however, important that during one time instant, the route planner and the cooperation validation 1 always take the same thresholds into account. When evaluating trajectories generated by the ego vehicle, the motion planner 4 should have already incorporated acceptable boundary conditions, and the cooperation validation 1 should preferably not apply different threshold values. For some cooperation protocols, however, others can propose maneuvers for the ego vehicle [11] and thus, exceed currently acceptable thresholds.

The threshold values for the automated modes are a design choice, just like they are for manual driving. Depending on the protocol, it may also be possible to communicate these thresholds to others for their cooperative maneuver design. Measures should be in place to avoid having egoistic implementations with insensible thresholds (e.g., $a_{max}^+ = a_{max}^- = 0$, thus only accepting proposals without involving acceleration).

It is preferable to not including other user preferences or even a manual request to the main passenger to reduce unfairness induced by egoistic passengers. The conditions described in this paper allow for a fair approach to cooperative maneuvers and should not be rendered ineffective by users' inclinations.

If every vehicle is responsible for their own maneuver, then such thresholds will be accounted for by the own maneuver planner 5. If the initiator proposes maneuvers also for other participants, then such thresholds could be exceeded. However, most proposals for cooperative maneuvers should be carried out well below those "acceptable thresholds," so it may be expected that this does not pose problems. On the other hand, there will be performance and clarity gains by proposing maneuvers for all involved vehicles since other participants do not have to calculate their reactions independently.

Taking all the hard, conditional, and threshold constraints into account, the overall assessment of a cooperation request can simply be expressed as

$$D = \prod_i H_i \cdot \prod_j C_j \cdot \prod_k T_k, \tag{2}$$

where $D = 1$ means an acceptance of the maneuver and $D = 0$ implies a denial. The advantage of a set of independent decision criteria as opposed to a lumped cost function is that there is no need for normalization and term weights across such heterogeneous criteria as outlined above.

All constraints $H_i$ and $T_i$ are defined according to

$$[H_i | T_i] = \begin{cases} 1 & \text{if constraint Hi/Ti is not violated,} \\ 0 & \text{otherwise.} \end{cases} \tag{3}$$

Conditional constraints will only play a role if vehicles evaluate proposals of others. If the maneuver is generated by the ego vehicle's motion planning unit 4 itself, then all derived possibilities should be treated as acceptable. For proposals of others,

$$C_j = \begin{cases} 1 & \text{if constraint Cj is not violated,} \\ P_{\text{req}} & \text{otherwise,} \end{cases} \tag{4}$$

where

$$P_{\text{req}} = \begin{cases} 1 & \text{if the initiating vehicle has high priority,} \\ 0 & \text{otherwise.} \end{cases} \tag{5}$$

High priority vehicles are special vehicles like police cars or ambulances and are, for example, characterized by the respective fields in the Special Vehicle Extensions data frame [15] within their CAMs or BSMs.

Next, the feasibility of the algorithm described above is demonstrated by evaluating the algorithm especially with respect to the computational needs and thus its applicability in real life. The evaluation is based on simulations using the cooperation protocol CVIP [11].

For the simulation, the network simulator ns-3 [16] was combined with Simulation of Urban Mobility (SUMO) for road traffic simulation. The intelligent transport system (ITS) framework ezCar2X [17] established the link between the two implementing connected applications [18]. Specifically, an oval track on which several vehicles drive, was designed. The host vehicle (HV), driving faster than the others, overtakes the remote vehicles (RVs) as it approaches them. The RVs drive alone or in groups of two or three vehicles. Via a long simulation runtime for each parameter setting, we ensure that more than 300 maneuvers are proposed, negotiated, and executed.

Table I displays the used parameter ranges. Since CVIP represents maneuvers via abstract commands like change lane or accelerate, these commands need to be expanded translated to actual trajectories for collision validation. A constant trajectory expansion interval of 0.1 s was chosen instead of, e.g., a traveled-distance-based approach. Regarding cooperation validation, "no evaluation" (cv = 0) is contrasted with "complete validation" (cv = 5).

TABLE I
SIMULATION PARAMETER RANGES

| Parameter | Values | Parameter | Values |
|---|---|---|---|
| Simulated time | 30 000 s | $t_{rto}$ | 20 ms |
| $t_{man}$ (Man. duration) | 10 to 25 s | $N$ (No. participants) | 2 to 4 |
| Traj. val. interval | 0.1s | cv (Coop. validation) | 0, 5 |

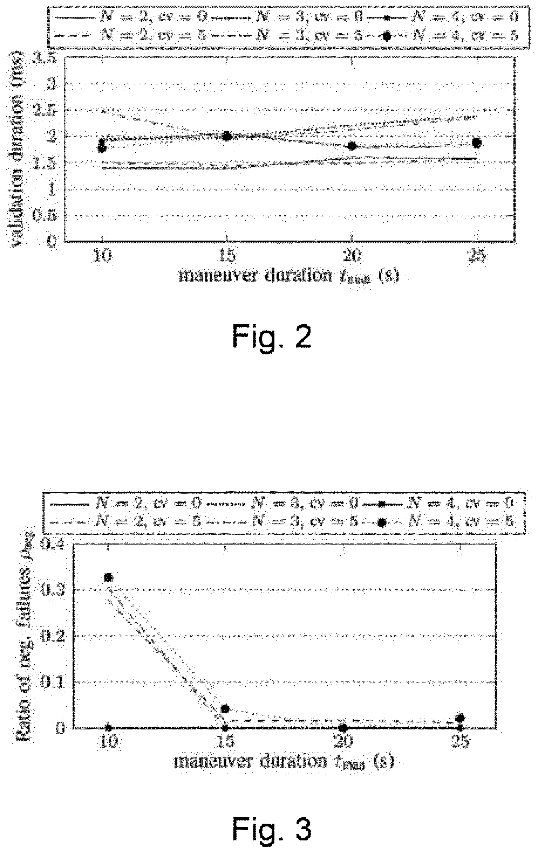

Fig. 2 shows a processing time vs. maneuver duration for each cooperation validation configuration cv and number of vehicles involved $N$. In other words, Fig. 2 shows how long the validation took depending on the complexity of the maneuver. Even for long proposals involving up to 3 RVs, deriving a decision never took longer than 10 ms. Due to the constant validation time interval of 0.1 s (vehicles calculate the trajectories for abstract maneuver names using steps of this length in order to check for collisions during the maneuver), the validation duration does not increase with the number of maneuver containers $I$. More involved vehicles N slightly increase the processing time, but since the measurement was only accurate to 1 ms, a clear trend is not visible. Combined with the results from Ref. [12] that 4 resends with an RTO of 20 ms are advisable for deployment of CVIP, validation adds acceptable overhead to the cooperation. Even though vehicles may need to re-validate re-sent maneuvers, the validation time does not prolong the RTO, so only the validation of the last sent proposal before agreement contributes to overall negotiation duration, and this contribution is minor.

Fig. 3 shows the success rate of negotiation when validating proposals as compared to the baseline without validation, for $p_{drop}$ = 0. Specifically, Fig. 3 shows the ratio of negotiation failures based on cooperation validation, for $p_{drop}$ = 0. High failures for $t_{man}$ = 10 s are due to lack of time to overtake all involved vehicles and thus detected collisions. Short maneuver durations lead to failures disproportionately often because given a maximum speed of the HV, the maneuver duration of 10 s is too short to overtake all vehicles in time. Therefore, the cooperation algorithm denies cooperation, which is the desired behavior for this case. For the other scenarios, the low single-digit percentages of failures show that the negotiation quality does not deteriorate compared to not using the cooperation algorithm.

The algorithm design proposed herein ensures that vehicles do not refuse feasible cooperation requests. Our evaluation shows that this happens in a milliseconds time frame, which is fast enough for most cooperative maneuvers. As demonstrated in earlier work [12], for example, vehicles may use an RTO of 20 ms for the request message, which gives enough time for validation using our proposed algorithm.

The evaluation results explained above show that the proposed algorithm for validating cooperative maneuvers is efficient and real-time capable. Notably, the algorithm does not make assumptions on the underlying protocol and thus applies to cooperative maneuvers in general, regardless of the used application-layer protocol. This is advantageous, as it is currently an open question which cooperation protocol and standardization globally takes different routes (e.g., ETSI vs. SAE vs. C-SAE).

As an example, the effect of the decision algorithm on negotiation times for the protocol CVIP was evaluated. Based on the resulting short computation times in the low milliseconds range overly long processing delays are not to be expected also for most other protocols, even if algorithm details may differ. With CVIP, the validation enables finding suitable counter-proposals. If the cooperation algorithm finds that acceleration exceeds the acceptable range for some maneuver container, the application may suggest a counterproposal involving lower acceleration for that specific maneuver container.

Further, it should be noted that the default operation of the algorithm according to the exemplary embodiment discussed above is cooperative behavior, except for if one of the following constraints is violated: hard constraints (e.g., cooperation would result in a crash), conditional constraints (e.g., one exceed the speed limit to give way to an ambulance), and threshold constraints (e.g., if the maneuver would require to exceed a certain velocity, the ego vehicle will not cooperate).

In summary, the proposed decision scheme for cooperation validation may ensure safety and fairness while being independent of the underlying cooperative maneuver protocol and therefore generally applicable.

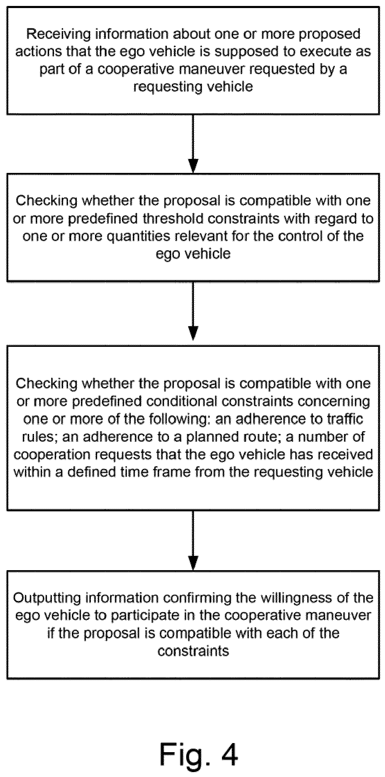

In accordance with the exemplary embodiment described and evaluated above, a computer-implemented method of deciding on participation in a cooperative maneuver involving an ego vehicle and at least a requesting vehicle may comprise, in particular, the steps shown in Fig. 4, namely: receiving information about one or more proposed actions that the ego vehicle is supposed to execute as part of a cooperative maneuver requested by the requesting vehicle; checking whether the proposal is compatible with one or more predefined threshold constraints with regard to one or more quantities relevant for the control of the ego vehicle; checking whether the proposal is compatible with one or more predefined conditional constraints, the one or more conditional constraints concerning one or more of an adherence to traffic rules, an adherence to a planned route; and a number of cooperation requests that the ego vehicle has received within a defined time frame from the requesting vehicle; and outputting information confirming the willingness of the ego vehicle to participate in the cooperative maneuver if the proposal is compatible with each of the constraints.

The method may be carried out by a computing device, such as the cooperation validation module 1 (or a processor executing the cooperation validation module 1 if it is understood as a software module) as shown in Fig. 1.

As explained in detail above with reference to an exemplary embodiment, the wherein the one or more threshold constraints comprise one or more threshold criteria with regard to one of more of the following quantities:

- a velocity of the ego vehicle;
- an acceleration of the ego vehicle;
- a change in a heading angle of the ego vehicle;
- change in a steering angle of the ego vehicle;
- a duration of a proposed lane change maneuver.

In accordance with the embodiment described in detail above, the method may additionally comprise:

- determining whether the requesting vehicle is a high priority vehicle or whether the requesting vehicle is in an emergency situation; and
- if it is determined that the requesting vehicle is a high priority vehicle or is in an emergency situation and that the proposal is compatible with the one or more threshold constraints, outputting information confirming the willingness of the ego vehicle to participate in the cooperative maneuver irrespective of whether or not the proposal is compatible with the one or more conditional constraints.

Further in accordance with the embodiment described in detail above, the method may additionally comprise:

- checking whether the proposal is compatible with one or more predefined hard constraints; and
- outputting information expressing the unwillingness of the ego vehicle to participate in the cooperative maneuver if the proposal is incompatible with one or more of the hard constraints, even if it is determined that the requesting vehicle is a high priority vehicle or is in an emergency situation.

Checking whether the proposal is compatible with one or more predefined hard constraints may comprise one or more of the following:

- checking that the proposal will not lead to a crash with an object perceived by the ego vehicle; and
- checking that the proposal does not lead to the ego vehicle leaving a safe road territory.

If it is foreseen in this context that the proposal will lead to a crash with an object perceived by the ego vehicle, the method may further comprise outputting information about the foreseen crash, e.g., to the requesting vehicle and/or to other vehicles that are potentially involved or affected by the proposed cooperative maneuver.

References

[1] *Road Vehicles - Safety of the Intended Functionality,* ISO/PAS Std. 21 448, Jan. 2019. [Online]. Available: www.iso.org/standard/70939.html

[2] B. Häfner, J. Jiru, H. Schepker et al., "Proposing cooperative maneuvers among automated vehicles using machine learning," in Proc. ACM Int. Conf. Model., Anal. Simul. Wireless Mobile Syst., Nov. 2021, pp. 173-180.

[3] C. Burger, P. F. Orzechowski, O. S. Tas, and C. Stiller, "Rating cooperative driving: A scheme for behavior assessment," in Proc. IEEE Int. Conf. Intell. Transp. Syst. (ITSC), Oct. 2018, pp. 1-6.

[4] W. Xu, A. Willecke, M. Wegner et al., "Autonomous maneuver coordination via vehicular communication," in Proc. Annu. IEEE/IFIP Int. Conf. Dependable Syst. Netw. Workshop (DSN-W), Jun. 2019, pp. 70-77.

[5] D. Heß, R. Lattarulo, J. Perez et al., "Negotiation of cooperative maneuvers for automated vehicles: Experimental results," in Proc. IEEE Int. Conf. Intell. Transp. Syst. (ITSC), Oct. 2019, pp. 1545-1551.

[6] D. Lenz, T. Kessler, and A. Knoll, "Tactical cooperative planning for autonomous highway driving using monte-carlo tree search," in Proc. IEEE Intell. Veh. Symp. (IV), Jun. 2016, pp. 447-453.

[7] H. Rewald and O. Stursberg, "Cooperation of autonomous vehicles using a hierarchy of auction-based and model-predictive control," in Proc. IEEE Intell. Veh. Symp. (IV), Jun. 2016, pp. 1078-1084.

[8] B. Häfner, V. Bajpai, G. A. Schmitt, and J. Ott, "A survey on cooperative architectures and maneuvers for connected and automated vehicles," IEEE Commun. Surveys Tuts., 2021, to be published.

[9] B. Lehmann, H.-J. Günther, and L. Wolf, "A generic approach towards maneuver coordination for automated vehicles," in Proc. IEEE Int. Conf. Intell. Transp. Syst. (ITSC), Nov. 2018, pp. 3333-3339.

[10] L. Hobert, A. Festag, I. Llatser et al., "Enhancements of V2X communication in support of cooperative autonomous driving," IEEE Commun. Mag., vol. 53, no. 12, pp. 64-70, Dec. 2015.

[11] B. Häfner, J. Jiru, K. Roscher et al., "CVIP: A protocol for complex interactions among connected vehicles," in Proc. IEEE Intell. Veh. Symp. (IV), Oct. 2020, pp. 510-515.

[12] B. Häfner, J. Jiru, H. Schepker et al., "Preventing failures of cooperative maneuvers among connected and automated vehicles," in Proc. ACM Int. Conf. Model., Anal. Simul. Wireless Mobile Syst., Nov. 2021, pp. 5-12.

[13] B. Li, Y. Zhang, Y. Ge et al., "Optimal control-based online motion planning for cooperative lane changes of connected and automated vehicles," in Proc. IEEE/RSJ Int. Conf. Intell. Robots Syst. (IROS), Sep. 2017, pp. 3689-3694.

[14] M. Vasic, G. Lederrey, I. Navarro, and A. Martinoli, "An overtaking decision algorithm for networked intelligent vehicles based on coop- erative perception," in Proc. IEEE Intell. Veh. Symp. (IV), Jun. 2016, pp. 1054-1059.

[15] *Dedicated Short Range Communications (DSRC) Message Set Dictionary,* SAE Std. J2735, Jul. 2020.

[16] (2021, May) ns-3, a discrete-event network simulator for internet systems. [Online]. Available: www.nsnam.org

[17] (2021, May) ezCar2x: Streamlined development of networked vehicle applications. [Online]. Available: https://www.ezcar2x.fraunhofer.de/en.html

[18] K. Roscher, S. Bittl, A. A. Gonzalez et al., "ezCar2X: Rapid- prototyping of communication technologies and cooperative ITS applications on real targets and inside simulation environments," in Proc. Wireless Commun. Inf. - Digit. Gesellschaft, Oct. 2014, pp. 51-62. [Online]. Available: http://publica.fraunhofer.de/eprints/urn nbn de 0011-n-3158830. pdf

**Claims**

1. A computer-implemented method of deciding on participation in a cooperative maneuver involving an ego vehicle and at least a requesting vehicle, the method comprising:

   ○ receiving information about one or more proposed actions that the ego vehicle is supposed to execute as part of a cooperative maneuver requested by the requesting vehicle;
   ○ checking

      ▪ whether the proposal is compatible with one or more predefined threshold constraints with regard to one or more quantities relevant for the control of the ego vehicle and
      ▪ whether the proposal is compatible with one or more predefined conditional constraints, the one or more conditional constraints concerning one or more of the following:

         • an adherence to traffic rules;
         • an adherence to a planned route;
         • a number of cooperation requests that the ego vehicle has received within a defined time frame from the requesting vehicle;

   ○ outputting information confirming the willingness of the ego vehicle to participate in the cooperative maneuver if the proposal is compatible with each of the constraints.

2. The method of claim 1, wherein the one or more threshold constraints comprise one or more threshold criteria with regard to one of more of the following quantities:

   - a velocity of the ego vehicle;
   - an acceleration of the ego vehicle;
   - a change in a heading angle of the ego vehicle;
   - a change in a steering angle of the ego vehicle;
   - a duration of a proposed lane change maneuver.

3. The method of one of the preceding claims, further comprising:

   ○ determining whether the requesting vehicle is a high priority vehicle or whether the requesting vehicle is in an emergency situation; and
   ○ if it is determined that the requesting vehicle is a high priority vehicle or is in an emergency situation and that the proposal is compatible with the one or more threshold constraints, outputting information confirming the willingness of the ego vehicle to participate in the cooperative maneuver irrespective of whether or not the proposal is compatible with the one or more conditional constraints.

4. The method of one of the preceding claims, further comprising:

   ○ checking whether the proposal is compatible with one or more predefined hard constraints; and
   ○ outputting information expressing the unwillingness of the ego vehicle to participate in the cooperative maneuver if the proposal is incompatible with one or more of the hard constraints, even if it is determined that the requesting vehicle is a high priority vehicle or is in an emergency situation.

5. The method of claim 4, wherein checking whether the proposal is compatible with one or more predefined hard constraints comprises one or more of the following:

   ○ checking that the proposal will not lead to a crash with an object perceived by the ego vehicle;
   ○ checking that the proposal does not lead to the ego vehicle leaving a safe road territory.

6. The method of claim 5, comprising checking whether the proposal will lead to a crash with an object perceived by the ego vehicle; and wherein, if it is foreseen that the proposal will lead to a crash with an object perceived by the ego vehicle, the method further comprises outputting information about the foreseen crash.

7. A computing device (1) being configured for executing the method of one of the preceding claims.

**8.** A computer program comprising instructions which, when the program is executed by a computing device (1), cause the computing device to carry out the method of one of claims 1 to 6.

**9.** A computer-readable storage medium comprising instructions which, when executed by a computing device (1), cause the computing device to carry out the method of one of claims 1 to 6.

**10.** A data carrier signal carrying the computer program of claim 9.

Fig. 1

Fig. 2

Fig. 3

```
┌─────────────────────────────────────────┐
│  Receiving information about one or more  │
│  proposed actions that the ego vehicle    │
│  is supposed to execute as part of a      │
│  cooperative maneuver requested by a      │
│  requesting vehicle                       │
└─────────────────────────────────────────┘
                    │
                    ▼
┌─────────────────────────────────────────┐
│  Checking whether the proposal is         │
│  compatible with one or more predefined   │
│  threshold constraints with regard to     │
│  one or more quantities relevant for the  │
│  control of the ego vehicle               │
└─────────────────────────────────────────┘
                    │
                    ▼
┌─────────────────────────────────────────┐
│  Checking whether the proposal is         │
│  compatible with one or more predefined   │
│  conditional constraints concerning       │
│  one or more of the following: an         │
│  adherence to traffic rules; an adherence │
│  to a planned route; a number of          │
│  cooperation requests that the ego        │
│  vehicle has received within a defined    │
│  time frame from the requesting vehicle   │
└─────────────────────────────────────────┘
                    │
                    ▼
┌─────────────────────────────────────────┐
│  Outputting information confirming the     │
│  willingness of the ego vehicle to        │
│  participate in the cooperative maneuver  │
│  if the proposal is compatible with each  │
│  of the constraints                       │
└─────────────────────────────────────────┘
```

Fig. 4

Europäisches
Patentamt
European
Patent Office
Office européen
des brevets

# EUROPEAN SEARCH REPORT

Application Number

EP 22 18 4907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/043099 A1 (BAYERISCHE MOTOREN WERKE AG [DE]) 3 March 2022 (2022-03-03) * figures 1-11 * * page 1, line 1 - page 3, last line * * page 6, line 25 - page 10, line 23 * ----- | 1-10 | INV. G08G1/16 G05D1/00 H04W4/46 B60W60/00 |
| A | US 2018/319403 A1 (BUBURUZAN TEODOR [DE] ET AL) 8 November 2018 (2018-11-08) * claims 1-13 * * paragraph [0037] – paragraph [0053] * * paragraph [0065] * * paragraph [0075] – paragraph [0108] * ----- | 1-10 | |
| A | LLATSER IGNACIO ET AL: "Cooperative Automated Driving Use Cases for 5G V2X Communication", 2019 IEEE 2ND 5G WORLD FORUM (5GWF), IEEE, 30 September 2019 (2019-09-30), pages 120-125, XP033665226, DOI: 10.1109/5GWF.2019.8911628 [retrieved on 2019-11-25] * paragraphs [000I], [0III] * * figures 1-7 * * table I * ----- | 1-10 | TECHNICAL FIELDS SEARCHED (IPC) G08G G05D H04W B60W |

The present search report has been drawn up for all claims

| Place of search | Date of completion of the search | Examiner |
|---|---|---|
| The Hague | 30 November 2022 | van der Pol, Edwin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 4907

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| WO 2022043099 | A1 | 03-03-2022 | DE 102020122232 | A1 | 03-03-2022 |
| | | | WO 2022043099 | A1 | 03-03-2022 |
| US 2018319403 | A1 | 08-11-2018 | CN 108349496 | A | 31-07-2018 |
| | | | DE 102016205140 | A1 | 04-05-2017 |
| | | | EP 3371022 | A1 | 12-09-2018 |
| | | | JP 6682629 | B2 | 15-04-2020 |
| | | | JP 2018534693 | A | 22-11-2018 |
| | | | KR 20180066191 | A | 18-06-2018 |
| | | | US 2018319403 | A1 | 08-11-2018 |
| | | | WO 2017076636 | A1 | 11-05-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2020060293 W

### Non-patent literature cited in the description

- **B. HÄFNER ; J. JIRU ; H. SCHEPKER et al.** Proposing cooperative maneuvers among automated vehicles using machine learning. *Proc. ACM Int. Conf. Model., Anal. Simul. Wireless Mobile Syst.,* November 2021, 173-180
- **C. BURGER ; P. F. ORZECHOWSKI ; O. S. TAS ; C. STILLER.** Rating cooperative driving: A scheme for behavior assessment. *Proc. IEEE Int. Conf. Intell. Transp. Syst. (ITSC),* October 2018, 1-6
- **W. XU ; A. WILLECKE ; M. WEGNER et al.** Autonomous maneuver coordination via vehicular communication. *Proc. Annu. IEEE/IFIP Int. Conf. Dependable Syst. Netw. Workshop (DSN-W),* June 2019, 70-77
- **D. HEß ; R. LATTARULO ; J. PEREZ et al.** Negotiation of cooperative maneuvers for automated vehicles: Experimental results. *Proc. IEEE Int. Conf. Intell. Transp. Syst. (ITSC),* October 2019, 1545-1551
- **D. LENZ ; T. KESSLER ; A. KNOLL.** Tactical cooperative planning for autonomous highway driving using monte-carlo tree search. *Proc. IEEE Intell. Veh. Symp. (IV),* June 2016, 447-453
- **H. REWALD ; O. STURSBERG.** Cooperation of autonomous vehicles using a hierarchy of auction-based and model-predictive control. *Proc. IEEE Intell. Veh. Symp. (IV),* June 2016, 1078-1084
- **B. HÄFNER ; V. BAJPAI ; G. A. SCHMITT ; J. OTT.** A survey on cooperative architectures and maneuvers for connected and automated vehicles. *IEEE Commun. Surveys Tuts.,* 2021

- **B. LEHMANN ; H.-J. GÜNTHER ; L. WOLF.** A generic approach towards maneuver coordination for automated vehicles. *Proc. IEEE Int. Conf. Intell. Transp. Syst. (ITSC),* November 2018, 3333-3339
- **L. HOBERT ; A. FESTAG ; I. LLATSER et al.** Enhancements of V2X communication in support of cooperative autonomous driving. *IEEE Commun. Mag.,* December 2015, vol. 53 (12), 64-70
- **B. HÄFNER ; J. JIRU ; K. ROSCHER et al.** CVIP: A protocol for complex interactions among connected vehicles. *Proc. IEEE Intell. Veh. Symp. (IV),* October 2020, 510-515
- **B. HÄFNER ; J. JIRU ; H. SCHEPKER et al.** Preventing failures of cooperative maneuvers among connected and automated vehicles. *Proc. ACM Int. Conf. Model., Anal. Simul. Wireless Mobile Syst.,* November 2021, 5-12
- **B. LI ; Y. ZHANG ; Y. GE et al.** Optimal control-based online motion planning for cooperative lane changes of connected and automated vehicles. *Proc. IEEE/RSJ Int. Conf. Intell. Robots Syst. (IROS),* September 2017, 3689-3694
- **M. VASIC ; G. LEDERREY ; I. NAVARRO ; A. MARTINOLI.** An overtaking decision algorithm for networked intelligent vehicles based on coop- erative perception. *Proc. IEEE Intell. Veh. Symp. (IV),* June 2016, 1054-1059
- **K. ROSCHER ; S. BITTL ; A. A. GONZALEZ et al.** ezCar2X: Rapid- prototyping of communication technologies and cooperative ITS applications on real targets and inside simulation environments. *Proc. Wireless Commun. Inf. - Digit. Gesellschaft,* October 2014, 51-62, http://publica.fraunhofer.de/eprints/urn nbn de 0011-n-3158830. pdf